# EUROPEAN PATENT APPLICATION

(11) **EP 4 782 405 A1**
(43) Date of publication of application: **29.07.2026**
(21) Application number: 23946903.4
(22) Date of filing: 27.10.2023
(51) Int. Cl.: C01G 53/00, C01G 45/12

(54) **LITHIUM-CONTAINING PRECURSOR MATERIAL, PREPARATION METHOD THEREFOR, AND LITHIUM ION POSITIVE ELECTRODE MATERIAL**

(30) Priority: 18.09.2023 CN 202311202744
(71) Applicant: Pinnacle Material Technologies Co., Ltd., Shenzhen, Guangdong 518055 (CN)
(72) Inventor: XU, Jian, Shenzhen, Guangdong 518055 (CN); ZHAO, Xiaolian, Shenzhen, Guangdong 518055 (CN); WANG, Fenghua, Shenzhen, Guangdong 518055 (CN); FANG, Gang, Shenzhen, Guangdong 518055 (CN); LI, Shiwen, Shenzhen, Guangdong 518055 (CN)
(74) Representative: Longoni, Alessandra
(86) International application number: PCT/CN2023/127272
(87) International publication number: WO 2025/060185

(57) **Abstract**

Disclosed are lithium-containing precursor material and a preparation method therefor, and lithium-ion cathode material, where the lithium-containing precursor material has a chemical formula of LiₓM_{y}D, M is at least one of Ni, Co, Mn, Al, or Mg, and D is one or more of CO₃²⁻, OH⁻, and C₂O₄²⁻; a 2θ diffraction angle of the lithium-containing precursor material has characteristic peaks in an XRD pattern of a Cu target Kα1, and the characteristic peaks P1 and P2 are 20°-22° and 31°-33°, respectively, and an intensity ratio of the peaks (p1/p2) is 0 < (p1/p2) ≤ 10. Lithium and other metal elements in the lithium-containing precursor material achieve bulk molecular-level dispersion, such that neither batching nor mixing is required, ion migration resistance becomes small, sintering temperature is lowered, and the production costs are reduced . Moreover, lithium ion and metal salt have co-precipitation reaction, thereby reducing wastewater discharge by more than 30%.

## Description

### TECHNICAL FIELD

The present disclosure relates to the field of secondary batteries, and specifically relates to lithium-containing precursor material and a preparation method therefor, and lithium-ion cathode material.

### BACKGROUND

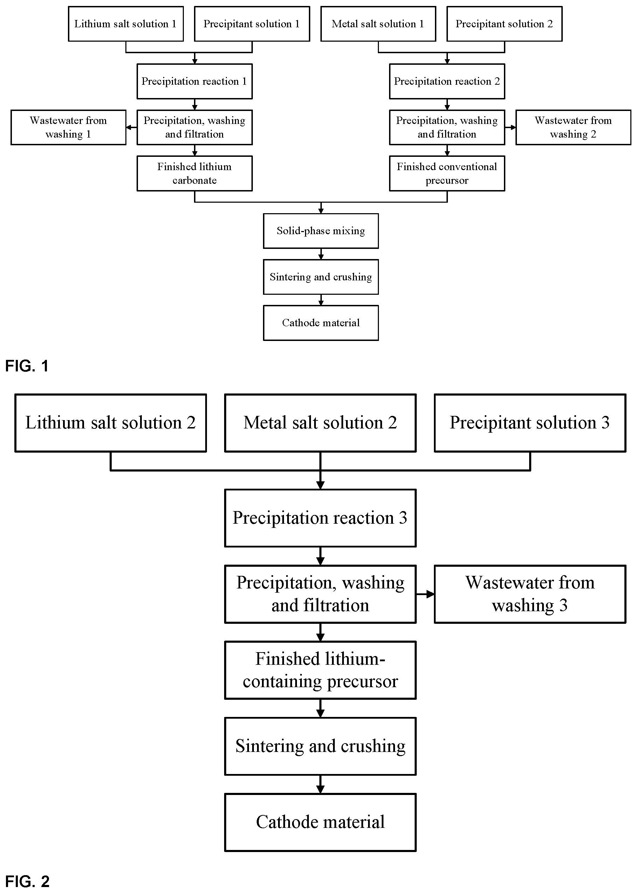

At present, conventional layered lithium-ion battery cathode material is primarily prepared by mixing a cathode material precursor with a lithium source (generally lithium carbonate) followed by solid-state reaction at a high temperature. The entire production process of cathode material, including the manufacturing of lithium carbonate, the manufacturing of the cathode material precursor, and the sintering after mixing the lithium carbonate with the cathode material precursor (see FIG. 1), has two main problems as follows:
first, a large amount of wastewater is discharged, resulting in high costs of wastewater treatment. Throughout the production, wastewater is mainly generated from the manufacturing processes of lithium carbonate and conventional precursor. In the manufacturing process of lithium carbonate, precipitate obtained through a precipitation reaction between a lithium salt solution and a precipitant solution needs to be washed to prepare the lithium carbonate, a large amount of wastewater from washing is thus generated. Similarly, in the manufacturing process of conventional precursor, a precipitate obtained through the precipitation reaction between a metal salt solution and a precipitant solution is washed to prepare the conventional precursor, and a large amount of wastewater from washing is also generated; and
second, the lithium carbonate and the precursor are unable to be mixed evenly. Different types of powers have different surface properties, resulting in an inherent problem of uneven mixing. In addition, particle sizes of the precursor and the lithium carbonate powders are both in a micron scale, therefore, the precursor and the lithium carbonate can only achieve a micron-scale surface mixture, leading to a long path of ion diffusion and migration between the lithium and other metal elements in the precursor, producing great ion migration resistance and requiring higher reaction activation energy, which requires a higher sintering temperature and an oxygen partial pressure to ensure smooth progress of solid-state reaction, resulting in great consumption of oxygen and energy.

### SUMMARY

In order to address the deficiencies in the prior art, a first objective of the present disclosure is to provide lithium-containing precursor material, where lithium and other metal elements achieve bulk molecular-level dispersion, exhibiting better uniformity, such that ion migration resistance is small, lower reaction activation energy is required, and the consumption of oxygen and energy is reduced when cathode material is prepared.

In order to achieve the above objective, a technical solution adopted by the present disclosure is as follows:
lithium-containing precursor material, with a chemical formula of LiₓM_{y}D, where M is at least one of Ni, Co, Mn, Al, or Mg, and D is one or more of CO₃²⁻, OH⁻, or C₂O₄²⁻; 0.2<x<0.9, 0.25<y<0.9, and 0.5<x/y<1.5; a 2θ diffraction angle of the lithium-containing precursor material has the following characteristic peaks in an XRD pattern of a Cu target Kα1, the characteristic peak P1 at 20°-22° and the characteristic peak P2 at 31°-33°, and peak intensities p1 and p2 of the characteristic peak P1 and the characteristic peak P2 meet the following relational expression: 0 < (p1/p2) ≤ 10.

The present disclosure provides the lithium-containing precursor material, where lithium and other metal elements achieve bulk molecular-level dispersion, exhibiting better uniformity, such that ion migration resistance is small, lower reaction activation energy is required, and the consumption of oxygen and energy is reduced when the cathode material is prepared. M is a metal ion, which can include one or more of nickel, cobalt, manganese, aluminum, and magnesium. D is an anionic group, which can be one or more of anions of CO₃²⁻, OH⁻ and C₂O₄²⁻. By setting a specific ratio to prepare the lithium-containing precursor material, the cathode material prepared by the lithium-containing precursor material exhibits good crystal-phase structural stability. Specifically, a value of the x can be 0.25, 0.3, 0.35, 0.4, 0.45, 0.5, 0.55, 0.6, 0.65, 0.7, 0.75, 0.8, or 0.85, a value of the y can be 0.3, 0.35, 0.4, 0.45, 0.5, 0.55, 0.6, 0.65, 0.7, 0.75, 0.8, or 0.85, and a value of the x/y can be 0.6, 0.7, 0.8, 0.9, 1.0, 1.1, 1.2, 1.3, or 1.4. The lithium-containing precursor material has two obvious characteristic peaks P1 and P2, where an intensity ratio of the peaks (p1/p2) is 0 < (p1/p2) ≤ 10, which can be specifically 0.01, 0.05, 0.1, 0.5, 1, 1.5, 2, 2.5, 3, 3.5, 4, 4.5, 5, 5.5, 6, 6.5, 7, 7.5, 8, 8.5, 9, 9.5, or 10.

Specifically, a mass fraction of Li in the lithium-containing precursor material is 2.5 wt% -6.5 wt%, a mass fraction of M is 25 wt%-60 wt%, and a mass fraction of D is 40 wt%-75 wt%. Preferably, the mass fraction of Li is 2.5 wt%, 3 wt%, 3.2 wt%, 3.7 wt%, 4 wt%, 4.5 wt%, 5wt%, 5.5 wt%, 6 wt%, or 6.5wt%. Preferably, the mass fraction of M is 25 wt%, 28 wt%, 30 wt%, 35 wt%, 40 wt%, 45 wt%, 50 wt%, 55 wt%, or 60 wt%. Testing conditions for the mass fractions are as follows: precursor powder is subjected to heat treatment at 120°C in a vacuum oven for 4 h until a constant weight is realized, then cooled down to room temperature in vacuum, and a sample is vacuumed and sealed before testing. The mass fractions of Li and M are measured by ICP, a mass fraction of anion is calculated by subtracting the mass fractions of Li and M from 100% A median particle size (D₅₀) of the lithium-containing precursor material is 1.5-15 µm. Preferably, the median particle size (D₅₀) of the lithium-containing precursor material can be 1.5 µm, 2 µm, 2.5 µm, 5 µm, 6 µm, 7 µm, 8 µm, 9 µm, 10 µm, 12 µm, 13 µm, or 15 µm.

At least two endothermic peaks at 100°C-350°C are identified in a DSC curve of the lithium-containing precursor material. A number of the endothermic peaks can be two, three, four, five, or more than six.

A second objective of the present disclosure is to provide a preparation method for the lithium-containing precursor material. Compared with the prior art, the preparation method in the present disclosure can reduce amount of discharged wastewater and cut down costs of wastewater treatment (see FIG. 2). Moreover, in the present disclosure, the lithium co-precipitates with other metal elements to form the precursor in a liquid phase, thereby achieving bulk molecular-level dispersion, therefore, the lithium and other metal elements in the prepared lithium-containing precursor material are evenly mixed, exhibit a good dispersion effect and low reaction activation energy, and the consumption of oxygen and energy is reduced when the material is used to prepare the cathode material.

In order to achieve the above objective, the present disclosure adopts the following technical solution:
a preparation method for the lithium-containing precursor material, including the following steps:
step S1. preparing a metal salt solution, a lithium salt solution and a precipitant solution;
step S2. adding an auxiliary agent to a solvent in a protective atmosphere, stirring and mixing to obtain a reaction base solution, and adding the metal salt solution, the lithium salt solution and the precipitant solution dropwise to the reaction base liquid to obtain a precipitated product; and
step S3. aging, filtering, washing and drying the precipitated product to obtain the lithium-containing precursor material.

In the present disclosure, the lithium-containing precursor material is obtained through co-precipitation reaction between lithium ions and other metal elements in a liquid phase environment, and precipitated metal elements are uniformly dispersed in the resulting precursor material. Compared with the traditional processes for solid-phase mixing of a precursor and a lithium source, the precursor material prepared by the present disclosure has better mixing uniformity. Furthermore, compared with the traditional cathode manufacturing processes, one precipitation and washing step is reduced for the method, such that the amount of discharged wastewater is reduced, and an overall wastewater discharge is accordingly reduced. Since the lithium and other metal elements achieve bulk molecular-level mixing during the process that the lithium co-precipitates with other metal elements to form the lithium-containing precursor in the present disclosure, the ion diffusion and migration path of the solid-phase reaction is shortened, and the activation energy of the reaction is lowered, when the lithium-containing precursor material is used to prepare cathode material, which is conducive to the preparation of cathode material with better uniformity and improved electrochemical properties, while the consumption of oxygen and energy is reduced.

In the step S2, the protective atmosphere is one of an inert atmosphere, a nitrogen atmosphere, an argon atmosphere, or a carbon dioxide atmosphere, and preferably, the protective atmosphere is the carbon dioxide atmosphere. A flow rate of a protective gas is 0.2 L/min-50 L/min; and specifically, the flow rate of the protective gas can be 0.2 L/min, 0.8 L/min, 3 L/min, 5 L/min, 8 L/min, 10 L/min, 14 L/min, 18 L/min, 20 L/min, 25 L/min, 30 L/min, 35 L/min, 40 L/min, 45 L/min, or 50L/min, and preferably, 0.5-5 L/min. The solvent in the step S2 is deionized water. A reaction temperature in the step S2 is 25-90°C, specifically 25°C, 30°C, 35°C, 40°C, 45°C, 50°C, 55°C, 60°C, 65°C, 70°C, 75°C, 80°C, 85°C, or 90°C, and preferably, 40-70°C. A stirring speed during the reaction is 50-2000 rpm. Specifically, the stirring speed during the reaction is 50 rpm, 80 rpm, 90 rpm, 100 rpm, 120 rpm, 150 rpm, 200 rpm, 500 rpm, 600 rpm, 800 rpm, 1000 rpm, 1400 rpm, 1700 rpm, 1900 rpm, or 2000 rpm, and preferably, 800-1500 rpm. In the step S3, an aging temperature of the precipitated product is 20-90°C, specifically, the aging temperature is 20°C, 30°C, 40°C, 50°C, 60°C, 70°C, 80°C, or 90°C, and preferably, 45-80°C. Aging time can be 2-24 h, specifically, the aging time can be 2 h, 4 h, 6 h, 8 h, 10 h, 12 h, 15 h, 18 h, 20 h, 22 h, or 24h, and preferably, 10-14 h. In the step S3, filtering can be performed using any one of centrifugal filtration, ceramic membrane filtration, or plate-frame pressure filtration. Washing is performed with deionized water at a temperature of 25-60°C, and specifically 25°C, 30°C, 35°C, 40°C, 45°C, 50°C, 55°C, or 60°C. Drying can be performed using any one of vacuum drying, blast heating drying, or other method.

In the step S2, a molar ratio of solutes in the metal salt solution, the lithium salt solution and the precipitant solution is 1-3 : 0.5-2 : 0.5-2. Specifically, the molar ratio of solutes in the metal salt solution, the lithium salt solution and the precipitant solution is 1 : 0.5 : 0.5, 1 : 1 : 1, 2 : 1 : 1, 2 : 1 : 2, 2 : 1.5:1.5, 3:2:1, 3 : 2 : 2, 3 : 0.5 : 1. By setting a certain amount of the metal salt solution, the lithium salt solution and the precipitant solution, the lithium-containing precursor material with different metal compositions can be customized and developed.

A dropwise addition rate of the metal salt solution, the lithium salt solution and the precipitant solution is 0.05 mL/min - 100 mL/min. Specifically, the dropwise addition rate of each of the metal salt solution, the lithium salt solution and the precipitant solution in the step S2 can be 0.05 mL/min - 100 mL/min, and the dropwise addition rate can be 0.05 mL/min, 0.09 mL/min, 0.1 mL/min, 0.2 mL/min, 0.8 mL/min, 1 mL/min, 4 mL/min, 8 mL/min, 10 mL/min, 15 mL/min, 20 mL/min, 40 mL/min, 60 mL/min, 80 mL/min, or 100 mL/min, and preferably, 0.1-10 mL/min. The dropwise addition rate of any of the solutions can be controlled to make the reaction more complete, such that the elements in the precipitated product are dispersed more uniformly. The solute in the metal salt solution can be one or more of sulfates, chlorides, nitrates, and acetates of cobalt, nickel, manganese, aluminum, or magnesium. Specifically, the solute in the metal salt solution can be nickel sulfate hexahydrate, cobalt sulfate heptahydrate, manganese sulfate monohydrate, nickel chloride, nickel chloride, manganese chloride, cobalt chloride, magnesium chloride, aluminum chloride, cobalt nitrate, nickel nitrate, manganese nitrate, aluminum nitrate, cobalt acetate, nickel acetate, manganese acetate, aluminum acetate, or magnesium acetate. The selection of the foregoing cobalt, nickel, manganese, aluminum, and magnesium is conducive to forming the precursor material with practical application value and stability.

The solute in the lithium salt solution is one or more of lithium sulfate, lithium chloride, lithium nitrate, lithium sulfite, lithium hydroxide, lithium chlorate, lithium perchlorate, lithium bromide, lithium bromate, lithium iodide, lithium thiocyanate, lithium nitrite, lithium formate, lithium acetate, lithium carbonate, lithium citrate, and lithium oxalate. The lithium salt is a soluble lithium salt, which is conducive to forming a co-precipitate with the metal salt solution, ensuring a certain dispersion and uniformity. Preferably, the lithium salt is lithium chloride.

The solute in the precipitant solution is one or more of carbonates, hydroxides, oxalates, citrates, bicarbonates of lithium, sodium, calcium, potassium. The precipitant is selected from metal salts of lithium, sodium, calcium, potassium, and the like, which has a certain alkalinity, such that the lithium salt and the metal salts can undergo a co-precipitation reaction together. Anions in the precipitant play a precipitating role, and different anions can be selected to obtain different precipitates. Preferably, the precipitant is combined with different anions to maintain charge balance. Preferably, the precipitant is lithium citrate and lithium hydroxide.

The auxiliary agent is one or more of a cationic surfactant, an anionic surfactant, a nonionic surfactant, a metal chelating agent, and a polymer. Preferably, the auxiliary agent can be the polymer, which can include one or more of fatty alcohol polyoxyethylene ether, fatty acid polyoxyethylene ester, alkyl polyglucoside, alkyl alcohol amide, polyacrylamide, and ethoxylated sorbitan fatty acid ester, and preferably, the polyacrylamide. The auxiliary agent is capable of promoting the co-precipitation reaction of target metal cations (lithium ions and metal cations in the metal salt) and anions in a liquid phase environment, thereby increasing the reaction rate. A mass fraction of the auxiliary agent in the solution is 0.1-5%, and preferably, 0.2-0.5%.

Compared with the prior art, the present disclosure has the beneficial effects:
(1) Compared with the traditional precursors, the lithium-containing precursor material in the present disclosure contains the lithium, the lithium and other metal elements achieve bulk molecular-level dispersion inside the precursor in a co-precipitation manner, exhibiting better uniformity, such that ion migration resistance is small during solid-phase reaction, lower reaction activation energy is required, and the consumption of oxygen and energy is reduced during sintering.
(2) Compared with the traditional preparation methods of cathode material, the preparation method for the lithium-containing precursor material in the present disclosure promotes the co-precipitation reaction between the lithium ions and other metal cations, such that one precipitation and washing step is reduced for the method, and wastewater discharge is reduced by more than 30%, thereby cutting down the costs of wastewater treatment.
(3) Compared with the traditional preparation methods of cathode material, the lithium-containing precursor material in the present disclosure can directly enter the sintering equipment for solid-phase reaction to manufacture the cathode material, thereby avoiding the batching/mixing errors caused by manual operation or equipment fluctuations in traditional processes, and the resulting cathode material has lower process costs and better product consistency.

### BRIEF DESCRIPTION OF THE DRAWINGS

FIG. 1 is a flowchart of steps for preparing a precursor and cathode material using the prior art.
FIG. 2 is a flowchart of steps for preparing lithium-containing precursor material and cathode material according to the present disclosure.
FIG. 3 is an SEM image of lithium-containing precursor material prepared according to Example 1 of the present disclosure.
FIG. 4 is an EDS image showing distribution of elements in a cross section of lithium-containing precursor material prepared according to Example 1 of the present disclosure.
FIG. 5 is an XRD pattern of lithium-containing precursor material prepared according to Example 1 of the present disclosure.
FIG. 6 is an SEM image of cathode material prepared according to Example 1 of the present disclosure.
FIG. 7 is an XRD pattern of cathode material prepared according to Example 1 of the present disclosure.
FIG. 8 is an SEM image of cathode material prepared according to Comparative Example 1 of the present disclosure.
FIG. 9 is an XRD pattern of cathode material prepared according to Comparative Example 1 of the present disclosure.
FIG. 10 is a DSC curve diagram of lithium-containing precursor prepared according to Example 1 of the present disclosure and a conventional precursor mixed with lithium carbonate according to Comparative Example 1 of the present disclosure.

### DETAILED DESCRIPTIONS OF THE EMBODIMENTS

In order to make the technical solutions and advantages of the present disclosure clearer, the present disclosure and beneficial effects thereof will be further described in details below in combination with specific embodiments of the present disclosure are not limited to the embodiments herein.

### Example 1

A preparation method for lithium-containing precursor material, including the following steps:
step S1. 133.35 g of nickel sulfate hexahydrate, 57.04 g of cobalt sulfate heptahydrate and 51.45 g of manganese sulfate monohydrate were weighed, and deionized water was then added to dissolve and make up to a volume of 1 L to prepare a nickel-cobalt-manganese sulfate solution (a total metal molar concentration of 1 mol/L), which was marked as a solution A and used as a metal salt solution; 92.78 g of lithium chloride monohydrate was weighed, and deionized water was then added to dissolve and make up to a volume of 1 L to prepare a lithium chloride solution, which was marked as a solution B and used as a lithium salt solution; 64.50 g of lithium hydroxide monohydrate as weighed, and deionized water was then added to obtain a solution and made to a volume of 1 L to prepare a lithium hydroxide solution, which was marked as a solution C and used as a precipitant solution; and 0.077 g of polyacrylamide was used as an auxiliary agent.
step S2. the auxiliary agent and an appropriate amount of deionized water were mixed and stirred in a reaction kettle to obtain a reaction base solution; the reaction vessel was maintained in a carbon dioxide atmosphere, with a gas flow rate of the carbon dioxide of 0.5-5 L/min; and the metal salt solution (solution A), the lithium chloride solution (solution B) and the lithium hydroxide solution (solution C) were simultaneously added dropwise to the reaction kettle for a co-precipitation reaction to obtain a precipitated product, where a temperature in the reaction kettle was maintained at 70°C, with a stirrer inside the reaction vessel operating at a speed of 800 rpm, feeding rates of the solutions A, B, and C were all 0.2 mL/min, an appropriate amount of concentrated ammonia water was added during the reaction, and a pH value of a reaction system was controlled to 8-11.5.
step S3: the precipitated product was aged at 70°C for 12 h and then subjected to vacuum filtration to separate a filter cake and filtrate, the filter cake was washed 4 times with deionized water at 70°C, and dried in an oven at 120°C to a constant weight to obtain the lithium-containing precursor material, and lithium, nickel, cobalt, and manganese elements were evenly distributed within particles of the lithium-containing precursor material.

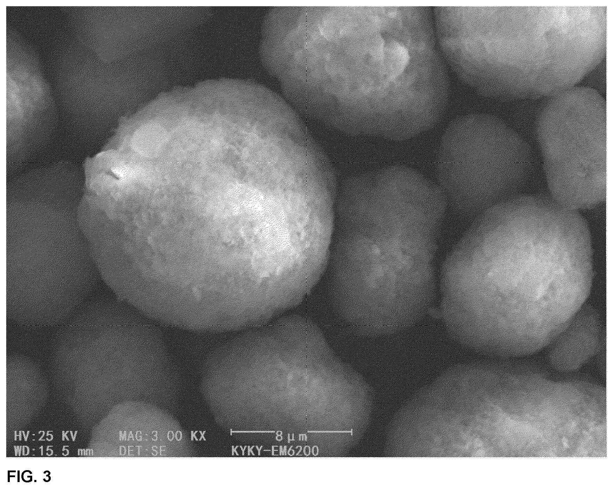

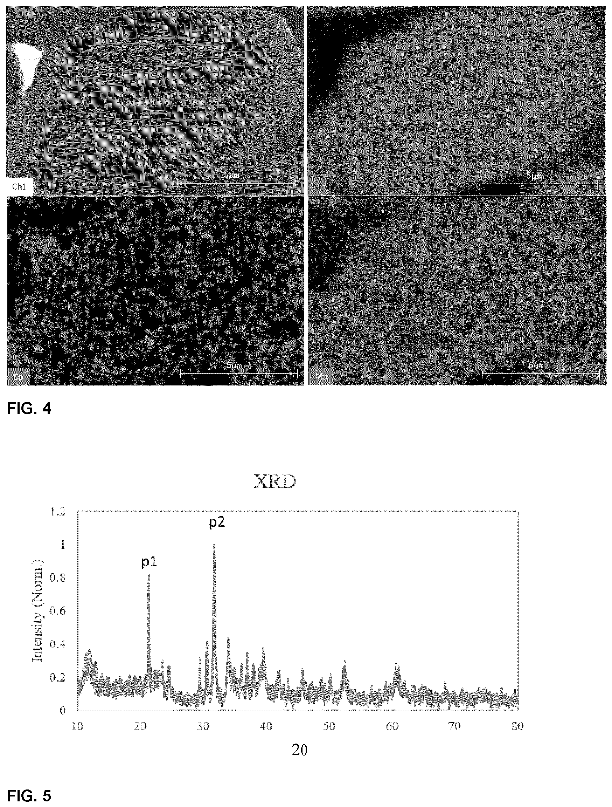

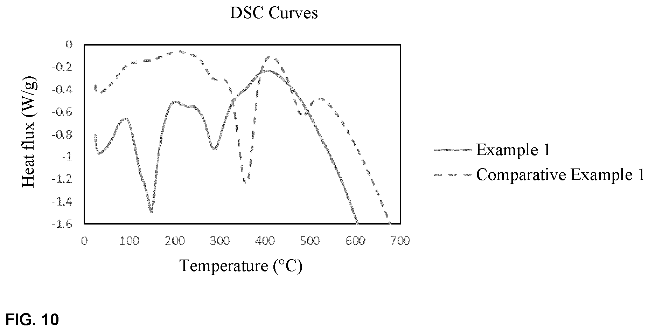

The lithium-containing precursor material was subjected to testing, and an SEM image thereof was shown in FIG. 3, distribution of all elements in a cross section of the lithium-containing precursor material was shown in FIG. 4, an XRD pattern thereof was shown in FIG. 5, and thermal analysis results thereof were shown in FIG. 10.

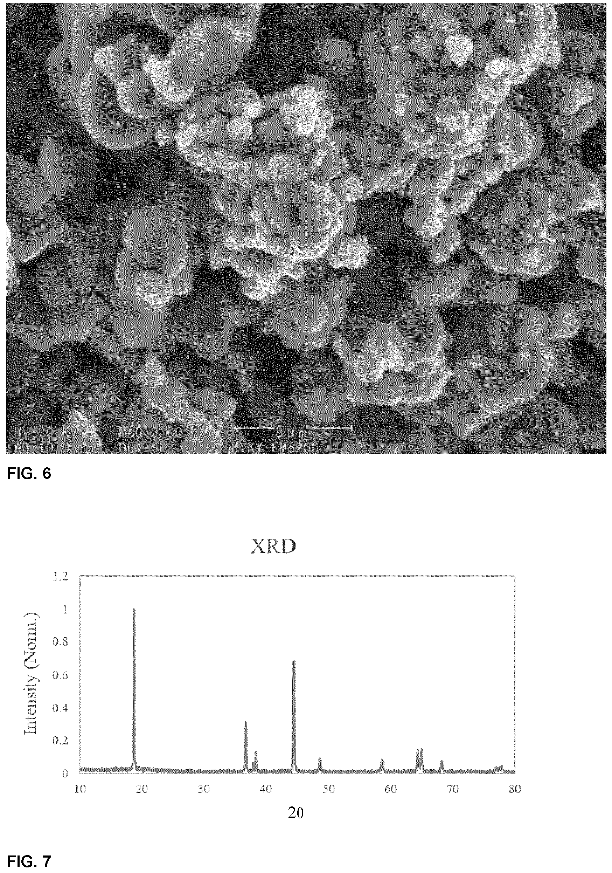

Preparation of cathode material: the obtained lithium-containing precursor material was taken and placed in a muffle furnace, and air was introduced into the furnace, and heated at a rate of 3-5°C/min, and then sintered at 850°C for 8 h to obtain a sample. After being cooled to room temperature, the sample was pulverized and screened through a 350-mesh sieve to obtain the black cathode material. The obtained black cathode material was subjected to testing, an SEM image thereof was shown in FIG. 6, and an XRD pattern thereof was shown in FIG. 7.

### Example 2

A preparation method for lithium-containing precursor material (NCM622), including the following steps:
step S1. 160.01 g of nickel sulfate hexahydrate, 57.06 g of cobalt sulfate heptahydrate and 34.31 g of manganese sulfate monohydrate were weighed, and deionized water was then added to dissolve and make up to a volume of 1 L to prepare a nickel-cobalt-manganese sulfate solution (a total metal molar concentration of 1 mol/L), which was marked as a solution A and used as a metal salt solution; 92.78 g of lithium chloride monohydrate was weighed, and deionized water was then added to dissolve and make up to a volume of 1 L to prepare a lithium chloride solution, which was marked as a solution B and used as a lithium salt solution; 144.45 g of lithium citrate tetrahydrate was weighed, and deionized water was then added to obtain a solution and made to a volume of 1 L to prepare a lithium citrate solution, which was marked as a solution C and used as a precipitant solution; and 0.081 g of polyacrylamide was used as an auxiliary agent.
step S2. the auxiliary agent and an appropriate amount of deionized water were mixed and stirred in a reaction kettle; the reaction vessel was maintained in a carbon dioxide atmosphere, with a gas flow rate of the carbon dioxide of 0.5-5 L/min; and the metal salt solution (solution A), the lithium chloride solution (solution B) and the lithium citrate solution (solution C) were simultaneously added dropwise to the reaction kettle for a co-precipitation reaction to obtain a precipitated product, where a temperature in the reaction kettle was maintained at 70°C, with a stirrer inside the reaction vessel operating at a speed of 1000 rpm, feeding rates of the solutions A, B, and C were all 0.3 mL/min, an appropriate amount of concentrated ammonia water was added during the reaction, and a pH value of a reaction system was controlled to be 8-10.5.
step S3: the precipitated product was aged at 70°C for 12 h and then subjected to vacuum filtration to separate a filter cake and filtrate, the filter cake was washed 4 times with deionized water at 70°C, and dried in an oven at 120°C to a constant weight to obtain the lithium-containing precursor material, and lithium, nickel, cobalt, and manganese elements were evenly distributed within particles of the lithium-containing precursor material.

Preparation of cathode material:
the obtained lithium-containing precursor material was taken and placed in an atmosphere furnace, and mixed gas of air and oxygen with an oxygen content of 50% was introduced into the furnace, and heated at a rate of 3-5°C/min, and then sintered at 820°C for 8 h to obtain a sample. After being cooled to room temperature, the sample was pulverized and screened through a 350-mesh sieve to obtain the black cathode material.

### Example 3

A preparation method for lithium-containing precursor material (NCM811), including the following steps:
step S1. 213.35 g of nickel sulfate hexahydrate, 28.52 g of cobalt sulfate heptahydrate and 17.15 g of manganese sulfate monohydrate were weighed, and deionized water was then added to dissolve and make up to a volume of 1 L to prepare a nickel-cobalt-manganese sulfate solution (a total metal molar concentration of 1 mol/L), which was marked as a solution A and used as a metal salt solution; 92.78 g of lithium chloride monohydrate was weighed, and deionized water was then added to dissolve and make up to a volume of 1 L to prepare a lithium chloride solution, which was marked as a solution B and used as a lithium chloride solution; 64.51 g of lithium hydroxide monohydrate was weighed, and deionized water was then added to make up to a volume of 1 L to prepare a lithium hydroxide solution, which was marked as a solution C and used as a lithium hydroxide solution; and 0.075 g of polyacrylamide was used as an auxiliary agent.
step S2. the auxiliary agent and an appropriate amount of deionized water were mixed and stirred in a reaction kettle; the reaction vessel was maintained in a carbon dioxide atmosphere, with a gas flow rate of the carbon dioxide of 0.5-5 L/min; and the metal salt solution (solution A), the lithium chloride solution (solution B) and the lithium hydroxide solution (solution C) were added to the reaction kettle for a co-precipitation reaction to obtain a precipitated product, where a temperature in the reaction kettle was maintained at 70°C, with a stirrer inside the reaction vessel operating at a speed of 800 rpm, feeding rates of the solutions A, B, and C were all 0.15 mL/min, an appropriate amount of concentrated ammonia water was added during the reaction, and a pH value of a reaction system was controlled to be 9-11.5.
step S3: the precipitated product was aged at 70°C for 12 h and then subjected to pressure filtration to separate a filter cake and filtrate, the filter cake was washed 4 times with deionized water at 70°C, and dried in an oven at 120°C to a constant weight to obtain the lithium-containing precursor material, and lithium, nickel, cobalt, and manganese elements were evenly distributed within particles of the lithium-containing precursor material.

Preparation of cathode material:
the obtained lithium-containing precursor material was taken and placed in an atmosphere furnace, and mixed gas of air and oxygen (containing an oxygen volume fraction of 85%) was introduced into the furnace, and heated at a rate of 3-5°C/min, and then sintered at 770°C for 8 h to obtain a sample, and after being cooled to room temperature, the sample was pulverized and screened through a 350-mesh sieve to obtain the black cathode material.

### Example 4

A preparation method for lithium-containing precursor material (NCA80/15/5), including the following steps:
step S1. 213.35 g of nickel sulfate hexahydrate, 42.78 g of cobalt sulfate heptahydrate and 8.59 g of aluminium sulfate were weighed, and deionized water was then added to dissolve and make up to a volume of 1 L to prepare a nickel-cobalt-aluminium sulfate solution (a total metal molar concentration of 1 mol/L), which was marked as a solution A and used as a metal salt solution; 92.78 g of lithium chloride monohydrate was weighed, and deionized water was then added to dissolve and make up to a volume of 1 L to prepare a lithium chloride solution, which was marked as a solution B and used as a lithium salt solution; 64.51 g of lithium hydroxide monohydrate was weighed, and deionized water was then added to make up to a volume of 1 L to prepare a lithium hydroxide solution, which was marked as a solution C and used as a precipitant solution; and 0.074 g of polyacrylamide was used as an auxiliary agent.
step S2. the auxiliary agent and an appropriate amount of deionized water were mixed and stirred in a reaction kettle; the reaction vessel was maintained in a carbon dioxide atmosphere, with a gas flow rate of the carbon dioxide of 0.5-5 L/min; and the metal salt solution (solution A), the lithium chloride solution (solution B) and the lithium hydroxide solution (solution C) were added to the reaction kettle for a co-precipitation reaction to obtain a precipitated product, where a temperature in the reaction kettle was maintained at 80°C, with a stirrer inside the reaction vessel operating at a speed of 900 rpm, feeding rates of the solutions A, B, and C were all 0.2 mL/min, an appropriate amount of concentrated ammonia water was added during the reaction, and a pH value of a reaction system was controlled to be 8-11.5.
step S3: the precipitated product was aged at 70°C for 12 h and then subjected to pressure filtration to separate a filter cake and filtrate, the filter cake was washed 4 times with deionized water at 70°C, and dried in an oven at 120°C to a constant weight to obtain the lithium-containing precursor material, and lithium, nickel, cobalt, and aluminium elements were evenly distributed within particles of the lithium-containing precursor material.

Preparation of cathode material:
the obtained lithium-containing precursor material was taken and placed in an atmosphere furnace, and mixed gas of air and oxygen (containing an oxygen volume fraction of 85%) was introduced into the furnace, and heated at a rate of 3-5°C/min, and then sintered at 770°C for 8 h to obtain a sample, and after being cooled to room temperature, the sample was pulverized and screened through a 350-mesh sieve to obtain the black cathode material.

### Comparative Example 1

### Preparation of lithium carbonate:

(1) precipitation reaction: 278.9 g of anhydrous lithium sulfate and 270.2 g of sodium carbonate were weighed and dissolved separately in deionized water to obtain a lithium sulfate solution (lithium salt solution 1) and a sodium carbonate solution (precipitant solution 1), respectively. An appropriate amount of deionized water was added into a reaction kettle as a base liquid and stirring was started, the lithium salt solution 1 and the precipitant solution 1 were simultaneously added into the reaction kettle to allow a precipitation reaction, and a precipitated product was then obtained; where a temperature in the reaction kettle was maintained at 80°C, with a stirrer inside the reaction vessel operating at a speed of 500 rpm -1000 rpm, feeding rates of the lithium salt solution 1 and the precipitant solution 1 were 0.2 mL/min -1 mL/min, respectively. The precipitated product was aged at 60°C-70°C for 2 h.
(2) Washing and filtration: the precipitated product was subjected to vacuum filtration to separate solid from liquid, as well as a filter cake and filtrate. The filter cake was washed and filtered 5 times with deionized water, dried in an oven at 120°C to a constant weight, and then crushed to obtain the lithium carbonate.

### Preparation of Ni_{0.5}Co_{0.2}Mn_{0.3}(OH)₂ precursor:

(1) precipitation reaction: 266.7 g of nickel sulfate hexahydrate, 108.1 g of cobalt sulfate heptahydrate and 102.9 g of manganese sulfate monohydrate were weighed, and deionized water was then added to dissolve and make up to a volume of 1 L to prepare a nickel-cobalt-manganese sulfate solution (a metal salt solution 1); and 163.0 g of sodium hydroxide was weighed, deionized water was then added to dissolve, an appropriate amount of concentrated ammonia water was added and made up to a volume of 1 L to obtain a sodium hydroxide solution with an ammonia concentration (mass fraction) of 15% (a precipitant solution 2). Ammonia water, sodium hydroxide, and an appropriate amount of deionized water were mixed and stirred in a reaction kettle to obtain a reaction base solution (a pH value was controlled to be 11.5-12.5); nitrogen gas was introduced into the reaction kettle (with a gas flow rate of the nitrogen gas of 0.5-5 L/min); and the metal salt solution 1 and the precipitant solution 2 were simultaneously added dropwise to the reaction kettle for a co-precipitation reaction to obtain a precipitated product, where a temperature in the reaction kettle was maintained at 60°C-80°C, a pH value of the reaction system was controlled to be 11.7-11.9, a stirrer inside the reaction vessel operated at a speed of 500 rpm -1000 rpm, feeding rates of the metal salt solution 1 and the precipitant solution 2 were both 0.2 mL/min. The precipitated product was aged at 70°C for 12 h.
(2) Filtering and washing: the precipitated product was subjected to vacuum filtration to separate solid from liquid, as well as a filter cake and filtrate. The filter cake was washed and filtered 5 times with deionized water at 70°C, dried in an oven at 120°C to a constant weight, and then crushed to obtain a conventional precursor.

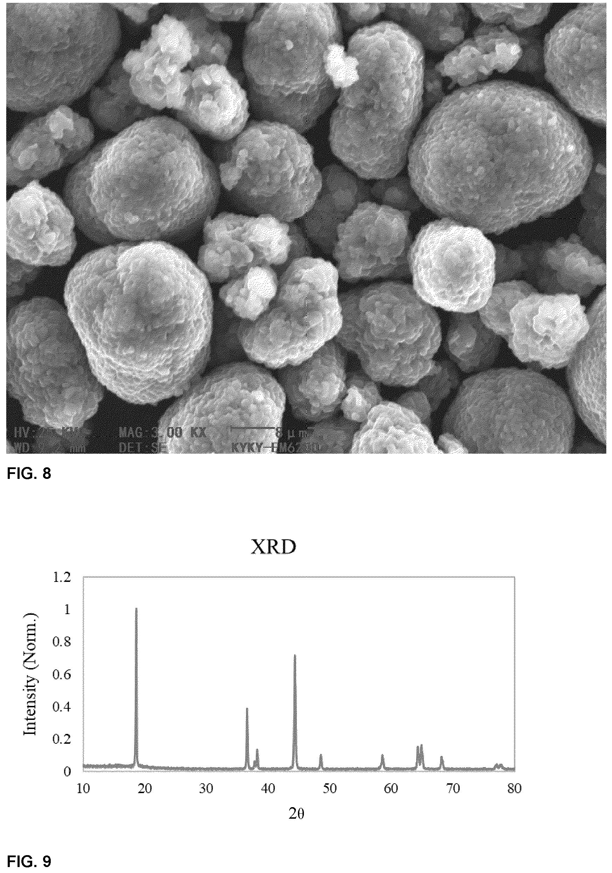

300 g of the Ni_{0.5}Co_{0.2}Mn_{0.3}(OH)₂ precursor prepared above and 124.2 g of lithium carbonate were taken and mixed through a small high-speed mixer (samples were taken randomly in three places to test a molar ratio of Li to Ni in a mixed powder, ensuring that an absolute value of a difference between a maximum (or minimum) value and an average value was <0.2%). The mixed powder was put into a saggar, and then placed in a muffle furnace, and air was introduced into the furnace, and heated at a rate of 3-5°C/min, and then sintered at 900°C for 10 h to obtain a sample. After being cooled to room temperature, the sample was pulverized and screened through a 350-mesh sieve to obtain the cathode material. An SEM image of the obtained cathode material was shown in FIG. 8, and an XRD pattern thereof was shown in FIG. 9. The mixed powder before sintering was subjected to thermal analysis, and analysis results were shown in FIG. 10.

### Comparative Example 2

300 g of outsourced Ni_{0.6}Co_{0.2}Mn_{0.2}(OH)₂ precursor and 124.5g of lithium carbonate were taken and mixed through a small high-speed mixer (samples were taken randomly in three places to test a molar ratio of Li to Ni in a mixed powder, ensuring that an absolute value of a difference between a maximum (or minimum) value and an average value was <0.2%). The mixed powder was put into a saggar, and then placed in an atmosphere furnace, and mixed gas of air and oxygen with an oxygen content of 50% was introduced into the furnace, and heated at a rate of 3-5°C/min, and then sintered at 850°C for 10 h to obtain a sample. After being cooled to room temperature, the sample was pulverized and screened through a 350-mesh sieve to obtain the black cathode material.

### Comparative Example 3

300 g of outsourced Ni_{0.8}Co_{0.1}Mn_{0.1}(OH)₂ precursor and 124.5g of lithium carbonate were taken and mixed through a small high-speed mixer (samples were taken randomly in three places to test a molar ratio of Li to Ni in a mixed powder, ensuring that an absolute value of a difference between a maximum (or minimum) value and an average value was <0.2%). The mixed powder was put into a saggar, and then placed in an atmosphere furnace, and mixed gas of air and oxygen (containing an oxygen volume fraction of 95%) was introduced into the furnace, and heated at a rate of 3-5°C/min, and then sintered at 790°C for 10 h to obtain a sample, and after being cooled to room temperature, the sample was pulverized and screened through a 350-mesh sieve to obtain the black cathode material.

### Comparative Example 4

300 g of outsourced Ni_{0.8}Co_{0.15}Al_{0.05}(OH)₂ precursor and 124.1g of lithium carbonate were taken and mixed through a small high-speed mixer (samples were taken randomly in three places to test a molar ratio of Li to Ni in a mixed powder, ensuring that an absolute value of a difference between a maximum (or minimum) value and an average value was <0.2%). The mixed powder was put into a saggar, and then placed in an atmosphere furnace, and mixed gas of air and oxygen (containing an oxygen volume fraction of 95%) was introduced into the furnace, and heated at a rate of 3-5°C/min, and then sintered at 790°C for 10 h to obtain a sample, and after being cooled to room temperature, the sample was pulverized and screened through a 350-mesh sieve to obtain the black cathode material.

The elemental composition of the precursor materials prepared in Examples 1-4 was tested, and testing results were itemized in Table 1.

**Table 1**

| Sample Information | Mass fraction (%) | | | | | Molar fraction | | | | |
|---|---|---|---|---|---|---|---|---|---|---|
| | Li | Ni | Co | Mn | Al | Li | Ni | Co | Mn | Al |
| Example 1 | 4.53 | 18.97 | 7.62 | 10.65 | 0 | 1.010 | 0.5 | 0.200 | 0.300 | 0 |
| Example 2 | 4.57 | 22.71 | 7.61 | 7.08 | 0 | 1.021 | 0.600 | 0.200 | 0.200 | 0 |
| Example 3 | 4.64 | 30.21 | 3.79 | 3.53 | 0 | 1.039 | 0.799 | 0.100 | 0.101 | 0 |
| Example 4 | 4.73 | 30.42 | 5.73 | 0 | 0.87 | 1.101 | 0.838 | 0.157 | 0 | 0.51 |

The molar fractions in Table 1 were calculated based on the actual measured mass fractions, with the mole numbers of Li, Ni, Co, Mn, and Al divided by a total mole number of Ni+Co+Mn+Al to obtain the molar fractions of Li, Ni, Co, Mn, and Al.

As can be seen from Table 1, the precursors prepared in Examples 1-4 all contained the metal elements present in the reaction solution of each example, indicating that lithium and other metal elements were co-precipitated. Metal content of the precursors in Examples 1-4 was measured by inductively coupled plasma atomic emission spectroscopy. The mass fractions of lithium in all the precursors fell within 4.53-4.73%, while the mass fractions of nickel, cobalt, manganese, and aluminum varied greatly due to different use amounts of nickel, cobalt, manganese, and aluminum in the reaction solutions in the examples. The mass fractions of all the metal elements were converted into molar ratios, it was found that the nickel, cobalt, manganese, and aluminum elements were in line with the molar ratios of the metals in the reaction solutions used in the examples.

With reference to FIG. 1, cathode materials are generally prepared by solid-phase mixing of lithium salts with finished precursors in the prior art, but both the lithium salts and the finished precursors need to be subjected to a precipitation reaction, washing and filtering, while washing and filtering will inevitably generate a large amount of washing wastewater, results in a large number of wastewater and high costs of wastewater treatment. With reference to FIG. 2, in the present disclosure, lithium ions and other metal elements are co-precipitated together, such that one precipitation and washing step is reduced for the method, discharge of wastewater is accordingly reduced, and costs of wastewater treatment are reduced. In addition, during the process that the lithium co-precipitates with other metal elements to form the precursor, the lithium and other metal elements achieve bulk molecular-level mixing, which is conducive to obtaining the cathode material with better electrochemical performance. Moreover, when the lithium-containing precursor material is used to prepare the cathode material, the ion diffusion/migration path of the solid-phase reaction is shortened, the activation energy of the reaction is lowered, and the consumption of oxygen and energy is reduced.

With reference to FIG. 4, the distribution of all elements in a cross section of the lithium-containing precursor obtained in Example 1 shows that the elements nickel, cobalt, and manganese are evenly distributed inside the precursor, this is because the precursor is obtained by the metal co-precipitation reaction. Since lithium has a small atomic mass, an energy dispersive spectroscopy (EDS) is still difficult to effectively characterize. Based on the data in Table 1, and the uniform distribution of nickel, cobalt, and manganese elements in FIG. 4, it can be found that the precursor in the present disclosure (compared with the traditional processes) can obtain the cathode material with a complete crystalline structure at a relatively low sintering temperature, and it is accordingly inferred that the lithium and the nickel, cobalt and manganese elements are evenly dispersed.

As can be seen from FIG. 5, the XRD pattern of the precursor prepared in Example 1 shows obvious diffraction peaks at 2θ diffraction angles of 20°-22° (P1) and 31°-33° (P2). Although only the XRD pattern of the precursor from Example 1 is provided herein, in fact, the diffraction peaks P1 and P2 can be commonly found in the precursors prepared by the method, and a range of p1/p2 (an intensity ratio in count mode) is 0 < p1/p2 ≤ 10.

Comparing FIG. 7 with FIG. 9, the XRD patterns of the cathode materials obtained in Example 1 and Comparative Example 1 both show a layered structure, indicating that the cathode material prepared from the lithium-containing precursor using the method in the present disclosure has a layered structure same as that of the cathode material prepared by the conventional methods.

With reference to FIG. 10, Example 1 has two obvious endothermic peaks between 100°C and 330°C, while Comparative Example 1 shows two obvious endothermic peaks between 330°C and 550°C. In the process of heating at room temperature, Example 1 starts the reaction at 100°C-300°C, while Comparative Example 1 does not start the reaction until the temperature reaches 330°C-530°C, indicating that the reaction activation energy of Example 1 is lower than that of Comparative Example 1 of the present disclosure.

The instruments/equipment involved in the present disclosure are shown in Table 2.

**Table 2**

| Instruments | Model | Supplier |
|---|---|---|
| Muffle furnace | SGM-80 | Luoyang Sigma HIGH Temperature Electric Furnace Co., Ltd. |
| Atmosphere furnace | SGM-VB96 | Luoyang Sigma HIGH Temperature Electric Furnace Co., Ltd. |
| Mixer | SHR-10A | Zhangjiagang City Yongli Machinery Co., Ltd. |
| Karl Fischer moisture meter | 831 KF Coulometer- | METROHM |
| Scanning electron microscopy | KYKY-EM6200 | KYKY Technology Co., Ltd. |
| Thermal analyser | Discovery SDT | TA Instruments |
| Inductive Coupled Plasma Emission Spectrometer (ICP) | Agilent 5110 ICP-OES | Agilent Technologies (China) Co., Ltd. |
| X-ray diffraction analyzer | DX-2700BH | Dandong HAOYUAN Instrument Co., Ltd. |
| FIB-SEM | NX5000 | Hitachi Scientific Instruments (Beijing) Co., Ltd |
| Vacuum oven | DZF | Shanghai Kuntian Laboratory Instrument Co., Ltd. |

Testing methods of the main instruments in the present disclosure are as follows:
(1) the moisture and composition analysis were performed according to the method stated in the Chinese Standards for Lithium Cobalt Oxide (GB/T 20252-2014), and the contents of all metal elements (including cobalt) were determined using the inductively coupled plasma atomic emission spectroscopy.
(2) XRD testing conditions: the XRD testing was performed using a Cu target, with a scanning rate of 4°/min over a 2θ range of 10°-80°. The precursors prepared in the examples were treated in a muffle furnace (in a carbon dioxide atmosphere) at 200°C for 2 h before the XRD testing, and the XRD testing was carried out after the furnace was cooled. The XRD patterns of the cathode materials were compared with PDF patterns for corresponding analysis.
(3) SEM and FIB-SEM samples: A cross-section of the precursor was obtained by FIB sputtering and etching, and EDS analysis was then conducted analyze the composition of the cross section.
(4) DSC Testing: the DSC testing was performed in an air atmosphere, with a heating rate of 20°C/min at a temperature of 20°C-700°C, and an air flow rate of 100 mL/min. The main raw/auxiliary materials involved in the present disclosure are shown in Table 3:

**Table 3**

| Specification | Purity | Supplier |
|---|---|---|
| Nickel sulfate hexahydrate | Analytical reagent | Sinopharm Chemical Reagent |
| Cobalt sulfate heptahydrate | Analytical reagent | Sinopharm Chemical Reagent |
| Manganese sulfate monohydrate | Analytical reagent | Sinopharm Chemical Reagent |
| Aluminium sulfate | Analytical reagent | Sinopharm Chemical Reagent |
| Lithium hydroxide monohydrate | Analytical reagent | Sinopharm Chemical Reagent |
| Lithium chloride monohydrate | Analytical reagent | Sinopharm Chemical Reagent |
| Lithium citrate tetrahydrate | Analytical reagent | Sinopharm Chemical Reagent |
| Anhydrous lithium sulfate | Analytical reagent | Sinopharm Chemical Reagent |
| Lithium carbonate: | Analytical reagent | Sinopharm Chemical Reagent |
| Sodium hydroxide | Analytical reagent | Sinopharm Chemical Reagent |
| Sodium carbonate | Analytical reagent | Sinopharm Chemical Reagent |
| Polyacrylamide | Solid content>90% | Guangdong Qikang Industrial Development Co., Ltd. |
| Ni_{0.6}Co_{0.2}Mn_{0.2}(OH)₂ | Ni+Co+Mn=60±0.5% (Mass fraction) D₅₀: 6-10 µm | CNGR Advanced Material Co., Ltd. |
| Ni_{0.8}Co_{0.1}Mn_{0.1}(OH)₂ | Ni+Co+Mn=60±0.5% (Mass fraction) D₅₀: 6-10µm | |
| Ni_{0.8}Co_{0.15}Al_{0.05}(OH)₂ | Ni+Co+Al=62±0.7% (Mass fraction) D₅₀: 6-10µm | |

According to the disclosure and instruction of the above specification, those skilled in the art can make modifications and variations to the above examples. Therefore, the present disclosure is not limited to the above specific examples, and any obvious improvement, substitutions or variations made those skilled in the art on the basis of the present disclosure should fall within the protection scope of the present disclosure. In addition, although some specific terms are used in the specification, these terms are for convenience of description only and do not constitute any limitation to the present disclosure.

## Claims

1. Lithium-containing precursor material, with a chemical formula of LiₓM_{y}D, wherein M is at least one of Ni, Co, Mn, Al, or Mg, and D is one or more of CO₃²⁻, OH⁻ , or C₂O₄²⁻; 0.2<x<0.9, 0.25<y<0.9, and 0.5<x/y<1.5; a 2θ diffraction angle of the lithium-containing precursor material has following characteristic peaks in an XRD pattern of a Cu target Kα1, the characteristic peaks P1 at 20°-22°, and the characteristic peak P2 at 31°-33°, and peak intensities of the characteristic peak p1 and the characteristic peak p2 meet the following relational expression: 0 < (p1/p2) ≤ 10.

2. The lithium-containing precursor material according to claim 1, wherein a mass fraction of Li in the lithium-containing precursor material is 2.5 wt% -6.5 wt%, a mass fraction of M is 25 wt%-60 wt%, and a mass fraction of D is 40 wt%-75 wt%.

3. The lithium-containing precursor material according to claim 1, wherein a D₅₀ value of the lithium-containing precursor material is 1.5-15 µm.

4. The lithium-containing precursor material according to claim 1, wherein at least two endothermic peaks between 100°C and 350°C are shown in a DSC curve of the lithium-containing precursor material.

5. A preparation method for the lithium-containing precursor material according to any one of claims 1-4, comprising the following steps:
step S1. preparing a metal salt solution, a lithium salt solution and a precipitant solution;
step S2. adding an auxiliary agent to a solvent in a protective atmosphere, stirring and mixing to obtain a reaction base solution, and adding the metal salt solution, the lithium salt solution and the precipitant solution dropwise to the reaction base liquid to obtain a precipitated product; and
step S3. aging, filtering, washing and drying the precipitated product to obtain the lithium-containing precursor material.

6. The preparation method for the lithium-containing precursor material according to claim 5, wherein in the step S2, a molar ratio of solutes in the metal salt solution, the lithium salt solution and the precipitant solution is 1-3 : 0.5-2 : 0.5-2.

7. The preparation method for the lithium-containing precursor material according to claim 5, wherein a dropwise addition rate of the metal salt solution, the lithium salt solution and the precipitant solution is 0.05 mL/min - 100 mL/min.

8. The preparation method for the lithium-containing precursor material according to claim 5, wherein the solute in the metal salt solution can be one or more of sulfates, chlorides, nitrates, and acetates of cobalt, nickel, manganese, aluminum, or magnesium.

9. The preparation method for the lithium-containing precursor material according to claim 5, wherein the solute in the lithium salt solution can be one or more of lithium sulfate, lithium chloride, lithium nitrate, lithium sulfite, lithium hydroxide, lithium chlorate, lithium perchlorate, lithium bromide, lithium bromate, lithium iodide, lithium thiocyanate, lithium nitrite, lithium formate, lithium acetate, lithium carbonate, lithium citrate, and lithium oxalate.

10. The preparation method for the lithium-containing precursor material according to claim 5, wherein the solute in the precipitant solution can be one or more of carbonates, hydroxides, oxalates, citrates, bicarbonates of lithium, sodium, calcium, potassium.

11. Lithium-ion cathode material, wherein the lithium-ion cathode material is made from the lithium-containing precursor material according to any one of claims 1-4.
